# EUROPÄISCHE PATENTSCHRIFT

(11) **EP 1 403 842 B1**
(45) Veröffentlichungstag und Bekanntmachung des Hinweises auf die Patenterteilung: **08.02.2006**
(21) Anmeldenummer: 03018176.2
(22) Anmeldetag: 09.08.2003
(51) Int. Cl.: G09F 19/00, D06F 39/00

(54) **Bedruckter Blendeneinleger aus lichtdurchlässigem Kunststoff für den Blendenträger eines Haushaltsgerätes**
Printed optical signaller from transparent plastics for the control panel display member of a household appliance
Signalisateur optique imprimé en matière plastique transparente pour l'écran d'un appareil électroménager

(30) Priorität: 27.09.2002 DE 20215066 U
(43) Veröffentlichungstag der Anmeldung: 31.03.2004
(73) Patentinhaber: Electrolux Home Products Corporation N.V., 1930 Zaventem (BE)
(72) Erfinder: Herzig, Jürgen, 91452 Wilhermsdorf (DE); Kraft, Max, 90614 Ammerndorf (DE); Gerngross, Albert, 91161 Hilpoltstein (DE)
(74) Vertreter: Baumgartl, Gerhard Willi

(56) Entgegenhaltungen:
- EP-A- 0 052 246
- EP-A- 0 868 960
- DE-U- 29 513 201
- GB-A- 2 240 206

## Beschreibung

Die Erfindung betrifft den Blendeneinleger einer Geschirrspülmaschine nach dem oberbegriff des Anspruches 1.

Um den Blendeneinleger bei einer Vielzahl von Gerätetypen mit unterschiedlich gestaltetem Blendeneinleger zur Aufnahme von Bedien- und Anzeigeelementen die beleuchteten Anzeigeelemente im Wesentlichen für den optischen Eindruck der Benutzer homogen auszuleuchten, weisen die bisher eingesetzten Anzeigeelemente eine mehrschichtig aufgebaute Klebefolie mit zumindest einer Streufolienschicht auf. Nachteilig an den bekannten Folien ist, dass diese zum einen teuer sind und zum anderen in aufwendigen Arbeitsgängen auf den Blendeneinleger aufgeklebt werden müssen. Ferner ist es von Nachteil, dass für jeden Gerätetyp mit unterschiedlich angeordneten Bedien- und Anzeigeelementen ein separater Blendeneinleger hergestellt werden muss.

Aus der Patentanmeldung GB 2 240 206 A ist eine Anzeigevorrichtung bekannt, die den Betriebszustand eines elektrischen Haushaltsgerätes angibt. Diese Anzeigevorrichtung ist 4-lagig aufgebaut und umfasst zwei Schichten mit elektrisch leitfähiger Bedruckung und einer Schicht mit einem Elektrolumineszensmaterial.

Die Europäische Patentanmeldung EP 0 868 960 A1 offenbart eine Glasblende eines Haushaltsgerätes, deren Dekor im siebdruckverfahren aufgebracht ist. Dabei kommen mehrere aufeinander folgende Siebdruckvorgänge zum Einsatz, wobei Dekore, Symbole oder Zeichen durch Aufbringen mit Schichten unterschiedlicher Farbe hergestellt werden können und somit zu mehrfarbigen Blenden führen.

Es ist Aufgabe der Erfindung, einen Blendeneinleger für ein Haushaltgerät, wie Geschirrspül- oder Waschmaschine anzugeben, bei welchem die Fläche von Anzeigeelementen homogen ausleuchtbar ist und der Blendeneinleger kostengünstig herstellbar und verwendbar für verschiedene Gerätetypen ist.

Die Lösung dieser Aufgabe erfolgt bei einem Blendeneinleger für den Blendenträger eines Haushaltgerätes mit den Merkmalen des Anspruches 1.

Ein Blendeneinleger in einem Blendenträger, z. B. einer Geschirrspülmaschine, der beispielsweise im oberen Bereich einer verschwenkbaren Fronttür der Geschirrspülmaschine angeordnet ist, weist neben Aufnahmeöffnungen für Bedienelemente auch Anzeigeelemente in Form von ausleuchtbaren Teilflächen auf, die hinsichtlich des optischen Eindruckes für den Benutzer der Geschirrspülmaschine möglichst homogen leuchten und deswegen mit einem lichtstreufähigen Material, wie z. B. einem Streulack, ausgerüstet sind.

Die lichtstreuende Fläche des Anzeigeelementes wird von korrespondierend z.B. beabstandet angeordneten Leuchtquellen, wie z. B. von oberflächenbestückbaren SMD-Leuchtdioden, Glimmlampen oder Sieben-Segment-Anzeigen mit Licht angestrahlt. Die unterschiedlichen Lichtquellen weisen eine unterschiedliche Abstrahlcharakteristik des von ihnen ausgesandten Lichtspektrums auf, so dass es günstig ist, für einen insgesamt gleichmäßigen optischen Eindruck durch den Betrachter die Streufähigkeit des Lichtes für jedes Anzeigeelement individuell anpassbar einstellen zu können. Hierzu wird gemäß unter Ansprüchen 10 bis. 12 mit besonderem Vorteil vorgeschlagen, dass die Streulackschicht mit einer definierbaren gleichmäßigen Schichtdicke oder in der Streulackschicht für definierbare Teilflächen mit jeweils unterschiedlicher definierbarer Schichtdicke aufgetragen werden.

Gemäß unabhängigem Vorrichtungsanspruch 1 wird auf den Blendeneinleger aus einem lichtdurchlässigen Kunststoffmaterial, wie Polycarbonat oder auch Plexiglas, in an sich bekannter Weise zunächst in einer ersten Schicht der Schriftzug aufgebracht ist und auf diesen sowie weiteren Teilflächen des Blendeneinlegers in einer zweiten Schicht einer Einfärbung aufgebracht wird, die dabei freigelassenen Teilflächen sind als Lichtdurchtrittsöffnungen für die beleuchtbaren Anzeigeelemente vorgesehen. In einer dritten Schicht, in welcher ebenfalls die Lichtdurchtrittsöffnungen frei bleiben, wird im wesentlichen nur auf der Einfärbungsschicht eine Sperrschicht als dritte Schicht aufgebracht. Die Sperrschicht hat die Funktion den chemischen und physikalischen Angriff der Spülflüssigkeit und deren Dämpfe entgegen zu wirken. Als vierte Schicht ist zumindest im Bereich der vorgesehenen Lichtdurchtrittsöffnungen ein Streulack mit definierbarer Geometrie aufgebracht. Der Streulack kann auch im Randbereich der Lichtdurchtrittsöffnungen auf die angrenzende Schicht aufgetragen sein. Durch entsprechende Anordnung der Bedienelemente und der korrespondieren zugeordneten Anzeigeelemente kann mit einer definierbaren Geometrie ein Blendeneinleger für verschiedene Gerätetypen mit unterschiedlicher Anzahl von Anzeigeelementen und Bedienelementen hergestellt werden. Es ist hierbei besonders kostengünstig und reduziert den Arbeitsaufwand, da im unmittelbaren Anschluss an das aufbringen der Sperrschicht das aufbringen einer Streuschicht in den Bereichen der Lichtdurchtrittsöffnungen erfolgt.

Sofern verfahrenstechnisch günstig und die Haftung bzw. Lebensdauer der Streulackschicht verbessert, kann es Vorteilhaft sein die Streulackschicht bereits als dritte Schicht und die Sperrlackschicht als vierte Schicht aufzubringen.

Mit besonderem Vorteil sind erfindungsgemäß alle Schichten aufgedruckt, wobei dieser Aufdruck vorzugsweise im Siebdruck- oder Tampondruckverfahren erfolgt.

Vorzugsweise ist dabei die lichtstreuende Fläche der Anzeigeelemente des Blendeneinlegers im selben Arbeitsverfahren wie der schriftzuggebende Symboldruck und der farblich variierbare Einfärbedruck als auch der Sperrdruck nacheinander aufgebracht.

Mit Vorteil erfolgt das Aufdrucken des Schriftzuges, des Einfärbedruckes der Sperrschicht und der Streuschicht des Blendeneinlegers durch unmittelbar aufeinander folgende Arbeitsgänge, die in der Reihenfolge ihres Aufdruckes beliebig oft wiederholbar sind, was neben einer kostengünstigen Herstellung auch die Einschleppung von jeder Verunreinigungen in den Blendenträger verhindert und unterschiedliche Schichtdicken realisieren lässt.

Zur Einstellung eines gleichmäßigen optischen Gesamtbildes für den Betrachter ist es ferner zweckmäßig, für unterschiedliche Beleuchtungselemente, die neben einer unterschiedlichen Abstrahlcharakteristik auch eine unterschiedliche Beleuchtungsdichte aufweisen, die diesen Beleuchtungselementen zugeordneten Anzeigehflächen mit unterschiedlich dicker Streulackschicht auszurüsten, wobei vorzugsweise ein Streulack Anwendung findet, der bei zunehmender Schichtstärke einen zunehmenden Absorbtionsgrad und abnehmenden Transmissionsgrad der Lichtdürchlässigkeit aufweist, so dass die homogene Ausleuchtung der Anzeigeelemente, als auch deren Helligkeit, gleichmäßig einstellbar ist.

Der für das Streuverhalten des Lichtes verantwortlichen Streulack hat im Wesentlichen die Eigenschaften, zumindest für Licht im sichtbaren Bereich, d. h. in einem Bereich von 350 bis 780 nm, durchlässig zu sein und für das menschliche Auge des Betrachters keine Filterwirkung in diesem Wellenlängenbereich aufzuweisen. Hierdurch können ohne Einschränkung der einsetzbaren Beleuchtungselemente z. B. rote, gründe, gelbe, blaue Leuchtdioden eingesetzt werden. Es ist deshalb besonders günstig dass die Anzahl die im Streulack enthaltenen lichtstreuenden Partikel gegenüber den enthaltenen Lichtreflektierenden Partikeln maximiert ist.

Besonders bevorzugt, weil auch gegenüber der bisher eingesetzten Streufolie mit Gewinn an Einbauraum bzw. Einbauhöhe, ist die Dicke der streuenden Schicht von 125 µm auf einen Schichtdicken Bereich 5 µm bis 50 µm verringert, vorzugsweise beträgt bei einer Beleuchtung mit einer herkömmlichen Oberflächen montierbaren SMD- Leuchtdioden mit einem Durchmesser vom einem Millimeter im Rotbereich des sichtbaren Lichtspektrums bei einer Öffnung des Anzeigefensters mit einem Durchmesser von ca. 5 Millimeter die Schichtdicke der Streulackschicht vorzugsweise rund 10 µm.

Der erfindungsgemäß vorgeschlagene Blendeneinleger bietet ferner den Vorteil, dass keine lichtstreuenden Klebefolien individuell auf den Gerätetyp angepasst zugeschnitten und aufgeklebt werden müssen, so dass neben der Kosteneinsparung für die Klebefolien auch Arbeitszeit zum Aufbringen der lichtstreuenden Mittel eingespart.wird.

Es ist ferner von besonderem Vorteil, dass die Klebeverbindung zwischen der bisher eingesetzten Streufolie und dem Blendeneinleger entfällt, so dass bei einem aufeinander abgestimmten Lacksystem des Streu- und Sperrlackes die Verbindung beider Schichten im Wesentlichen durch Adhäsionskräfte auf den Grenzflächen der Lackschicht zustande kommt, was einer langlebigen Haftung beider Schichten förderlich ist.

Um die aufgedruckten Schichten nicht durch den Benutzer von außen beschädigen zu lassen, wird der Aufdruck im sog. Hinterdruck auf der dem Benutzer abgewandten Seite des Blendeneinlegers aufgedruckt. Auf der dem Benutzer abgewandten Seite des Blendeneinlegers kann partiell ein Kleber aufgebracht sein, der eine bessere Fixierung des in den Blendenträger eingelegten Blendeneinleger zwischen beiden ermöglicht.

Da mit besonderem Vorteil die Streulackschicht ohne optisch wahrnehmbare Wirkung auf die darunter oder darüber liegende Sperrdruckschicht bei Beleuchtung von der Streulackseite auf deren Farbgebung ist, reicht für das Siebdruckverfahren zum Aufbringen der Streulackschicht eine Maske aus, die bei entsprechender Anordnung der Anzeige-, Bedien- und Beleuchtungselemente für alle Varianten der Gerätetypen eingesetzt werden kann.

Im Folgenden ist an einem Ausführungsbeispiel die Erfindung näher erläutert.

Dabei zeigen:
- Fig. 1 a bis 1 d: zeigen die bisherige Ausbildung des Blendeneinlegers für unterschiedliche Gerätetypen mit.mehreren auf die Anzeigeelemente aufgeklebter lichtstreuender Fensterfolie.
- Fig. 2: zeigt einen erfindungsgemäß aufgebauten Blendenträger in der Vorderansicht für den Benut- zer
- Fig. 3 a bis 3 c: zeigen die wesentlichen Schritte zur Herstellung eines erfindungsgemäßen.Blendenträgers nach Fig. 2 mit Hilfe der dafür verwendeten Siebdruckmasken, wobei Fig. 3 a die Siebdruckmaske für den Symboldruck an der benutzerabgewandten Seite des Blendeneinlegers darstellt; Fig. 3 b zeigt die Schablone für das Aufbringen einer Einfärbeschicht und einer Sperrlackschicht; Fig. 3 c zeigt die Schablone zum Aufbringen einer Streulackschicht.

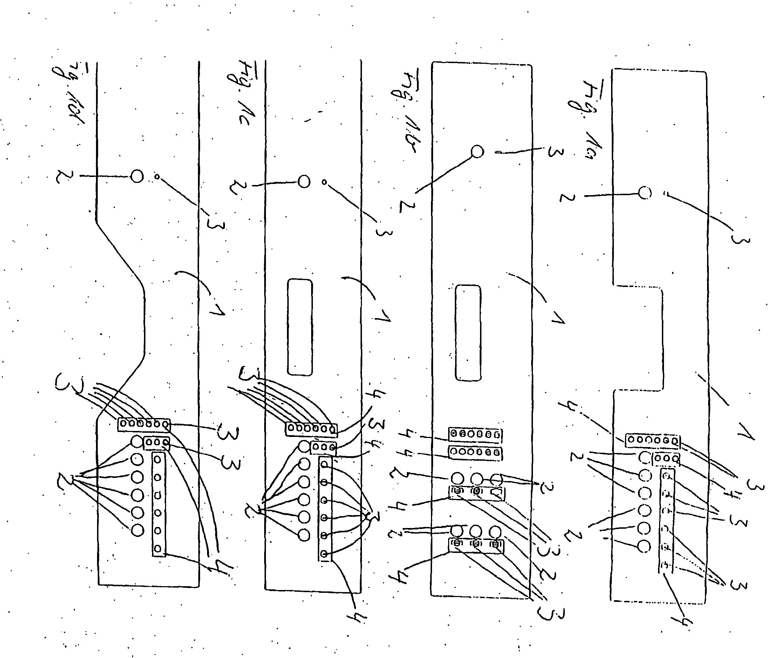

Fig. 1 a zeigt dabei einen Blendeneinleger (1) mit verschieden angeordneten Öffnungen für Bedienelemente (2), denen Anzeigeelemente (3) zugeordnet sind, wobei diese Anzeigeelemente (3) durch verschiedenartig zugeschnittene Fensterfolien (4), die eine lichtstreuende Eigenschaft besitzen, abgeklebt sind.
Fig. 1 b bis 1 d zeigt einen unterschiedlich in der Form gestalteten Blendeneinleger (1), der in verschiedener Anordnung und Ausgestaltung die Elemente 2, 3 und 4, wie in Fig.. 1 beschrieben, jedodh in unterschiedlicher Anordnung und Größe bzw. Ausgestaltung aufnimmt.

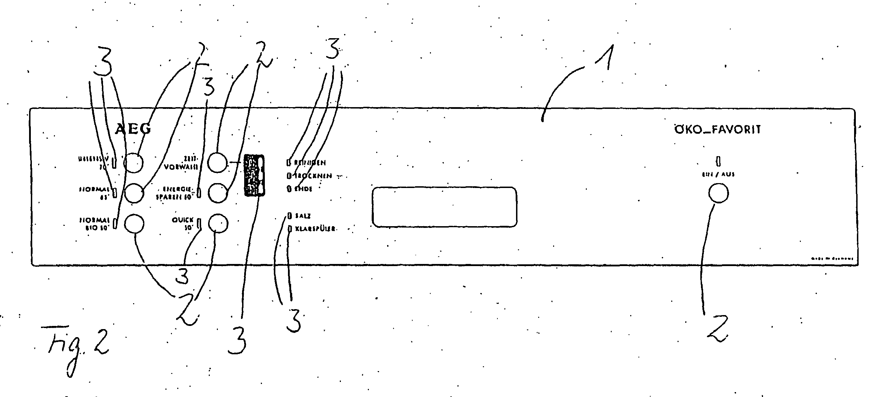

Fig. 2 zeigt den erfindungsgemäßen Blendeneinleger mit Ansicht von vorne, wobei wiederum der Blendeneinleger (1) verschiedene Bedienelemente (2) aufnimmt, denen jeweils Anzeigeelemente (3) zugeordnet sind. Ferner sind gleichartig beleuchtbare Anzeigeelemente als Anzeigen für die Konzentration, z. B. des Salzes und Klarspülers, vorgesehen.

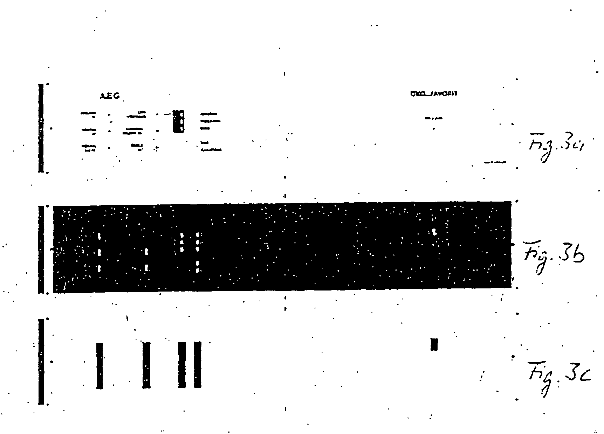

Fig. 3 a zeigt eine Maske zum Aufbringen des in erster Schicht liegenden Symboldruckes des Blendeneinlegers, wie in Fig. 2 dargestellt. Der Symbolschriftzug ist schwarz dargestellt. Die Kreuze sind Markierungspunkte für die Position der Anzeigeelemente.
Fig. 3 b zeigt eine Maske zum Aufbringen des Einfärbedruckes und des Sperrdruckes mit vorgesehenen Öffnungen für den Lichtdurchtritt auf dem Blendeneinleger (1), die die eigentlichen Anzeigeelemente bilden. Dabei ist die Einfärbeschicht und die Sperrlackschicht schwarz und in weißer Farbe die Freiflächen für die vorgesehenen Anzeigeelemente bzw. Lichtdurchtrittsöffnungen dargestellt.
Fig. 3 c zeigt eine Maske zum Aufbringen der Streulackschicht in dritter oder vierter Schicht auf dem Blendeneinleger (1), die Streulackschicht ist dabei in schwarzen Teilflächen dargestellt. Erfolgt das Aufbringen der Schichten in der Reihenfolge Symboldruck, Einfärbung, Sperrschicht, Streulack bzw. Symboldruck, Einfärbung, Streulack, Sperrschicht so werden bei erstgenannter Abfolge in korrespondierender Lage zu den weißen Lichtdurchtrittsflächen der Fig. 3 b somit die Anzeigeelemente vollständig vom Streulack bedeckt und teilweise die Sperrlackschicht durch Streulackschicht überdeckt.

Beim Durchführen eines Siebdruckverfahrens zur Herstellung des erfindungsgemäßen Blendeneinlegers wird beginnend mit einem Druck des Symbolschriftzuges gemäß Fig. 3 a, wird darauf folgend eine Einfärbeschicht in weißer öder jeder beliebiger anderen Farbe aufgetragen, ferner wird als dritte Schicht die Sperrschicht aufgedruckt und nach Aufdruck einer vierten Streulackschicht ist der Blendeneinleger, wie in Fig. 2 sichtbar, hergestellt.

## Patentansprüche

1. Blendeneinleger (1) aus liehtdurchlässigem Kunststoff, **dadurch gekennzeichnet, dass** auf einer Begrenzungsfläche des Blendeneinlegers (1) in einer ersten Schicht ein Symbolschriftzug aufgebracht ist, auf dieser ersten Schicht in einer zweiten Schicht zumindest in einer definierbaren Teilfläche eine farblich variabel einstellbare, den Blendeneinleger (1) einfärbende Einfärbung aufgebracht ist, wobei zumindest eine nicht mit Einfärbung versehene Teilfläche als Lichtdurchtrittsöffnung ausgebildet ist und in einer dritten Schicht eine Sperrschicht aufgebracht ist und in einer vierten Schicht zumindest auf den Lichtdurchtrittsöffnungen ein lichtstreuender Streulack mit definierbarer Schichtdicke aufgebracht ist.

2. Blendeneinleger (1) nach Anspruch 1, **dadurch gekennzeichnet, dass** der lichtdurchlässige Kunststoff durchsichtig ist.

3. Blendeneinleger (1) nach Anspruch 1 oder 2, **dadurch gekennzeichnet, dass** der Kunststoff Polycarbonat ist.

4. Blendeneinleger (1) nach einem der Ansprüche 1 bis 3, **dadurch gekennzeichnet, dass** die Einfärbung in der zweiten Schicht den Lichtdurchtritt sperrt.

5. Blendeneinleger (1) nach einem der Ansprüche 1 bis 4, **dadurch gekennzeichnet, dass** die nicht mit Einfärbung versehene Teilfläche in der Form eines Anzeigeelementes (3) ausgebildet ist.

6. Blendeneinleger (1) nach einem der Ansprüche 1 bis 5, **dadurch gekennzeichnet, dass** die in der dritten Schicht aufgebrachte Sperrschicht nur auf dem Einfårbedruck angeordnet ist.

7. Blendeneinleger (1) nach einem der Ansprüche 1 bis 6, **dadurch gekennzeichnet, dass** der Streulack in der dritten Schicht und die Sperrschicht als vierte Schicht aufgebracht ist.

8. Blendeneinleger (1) nach einem der Ansprüche 1 bis 7, **dadurch gekennzeichnet, dass** Symbolschriftzug. Einfärbung, Sperrschicht und Streulack aufgedruckt sind.

9. alendeneinleger (1) nach einem der Ansprüche 1 bis 8, **dadurch gekennzeichnet, dass** der Aufdruck der ersten bis vierten Schicht im Siebdruck- oder im Tampondruckverfahren ausführbar ist.

10. Blendeneinleger (1) nach einem der Ansprüche 1 bis 9, **dadurch gekennzeichnet, dass** zumindest die Streulackschicht in der dritten oder in der vierten Schicht in definierbaren Teilflächen mit jeweils unterschiedlicher Schichtstärke aufgedruckt ist.

11. Blendeneinleger (1) nach einem der Ansprüche 1 bis 10, **dadurch gekennzeichnet, dass** zumindest die Streulackschicht in der dritten oder vierten Schicht in gleichmäßiger Dicke aufgedruckt ist.

12. Blendenanleger (1) nach einem der Ansprüche 1 bis 11, **dadurch gekennzeichnet, dass** die Streulackschicht hauptsächlich lichtstreuende Partikel und zu einem geringst möglichen Anteil Licht reflektierende Partikel enthalt.

13. Blendeneinleger (1) nach einem der Ansprüche 1 bis 12, **dadurch gekennzeichnet, dass** die Sperrlackschicht lichtdurchlässig ist und keine optisch wahrnehmbare Filterwirkung des sichtbaren Lichtspektrums aufweist.

14. Blendeneinleger (1) nach einem der Ansprüche 1 bis 13, **dadurch gekennzeichnet, dass** die Schichtdicke der Sperrlackschicht in einem Bereich von 5 bis 50 µm liegt.

15. Blendeneinleger (1) nach einem der Ansprüche 1 bis 14, **dadurch gekennzeichnet, dass** die einzelnen Schichten an ihren Grenzflächen im Wesentlichen durch Adhäsionskräfte aneinander haften.

16. Blendeneinleger (1) nach einem der Ansprüche 1 bis 15, **dadurch gekennzeichnet, dass** die bedruckte Begrenzungsfläche des Blendeneinlegers (1), der Frontseite des Blendeneinlegers (1), die dem Benutzer zugewandt ist, gegenüberliegt.

17. Haushaltsgerät mit wenigstens einem Blendeneinleger (1) nach einem der Ansprüche 1 bis 16.

18. Verwendung eines Blendeneinlegers (1) nach einem der Ansprüche 1 bis 16 derart, dass der Blendeneinleger (1) einem Blendenträger, welcher zur Aufnahme von Bedienelementen (2) dient, als optischer Abachluss für den Blendenträger in einem Haushaltsgerät, z.B. einer Geschirrspülmaschine, Waschmaschine, Wäschetrockner, zugeordnet ist, im Blendeneinleger (1) Aufnahmeöffnungen für die Bedienelemente (2) und diesen korrespondierend optische Anzeigeelemente (3) zugeordnet sind, die in ihrer Form als definiert beleuchtbare Flächen gestaltbar sind, wobei den Anzeigeelementen (3) korrespondierend Beleuchtungselemente zugeordnet sind, die Licht mit unterschiedlicher Abstrahlcharakteristik aussenden und die Anzeigeelemente (3) beleuchten, wobei zumindest in einer Teilfläche zumindest eines Anzeigeelementes (3) das von den Beleuchtungselementen ausgesendete Licht gestreut wird.

## Claims

1. Control panel insert (1) composed of translucent plastics material, **characterised in that** a symbol script is applied to a border area of the control panel insert (1) in a first layer, a tinting being applied to this first layer in a second layer so as to tint the control panel insert (1) with colour variable tinting at least in a specifiable partial area, wherein at least one partial area not provided with tinting is formed as an aperture for the passage of light and a blocking layer is mounted in a third layer, and in a fourth layer, at least on the apertures for the passage of light, a light-scattering varnish is applied with a specifiable layer thickness.

2. Control panel insert (1) according to claim 1, **characterised in that** the translucent plastics material is transparent.

3. Control panel insert (1) according to claim 1 or 2, **characterised in that** the plastics material is a polycarbonate.

4. Control panel insert (1) according to one of claims 1 to 3, **characterised in that** the tinting in the second layer blocks the passage of light.

5. Control panel insert (1) according to one of claims 1 to 4, **characterised in that** the partial area not provided with tinting takes the form of a display element (3).

6. Control panel insert (1) according to one of claims 1 to 5, **characterised in that** the blocking layer applied in the third layer is disposed only on the tinting print.

7. Control panel insert (1) according to one of claims 1 to 6, **characterised in that** the scatter varnish is applied in the third layer and the blocking layer is applied as a fourth layer.

8. Control panel insert (1) according to one of claims 1 to 7, **characterised in that** the symbol script, tinting, blocking layer and scatter varnish are printed on.

9. Control panel insert (1) according to one of claims 1 to 8, **characterised in that** the impressions on the first to the fourth layers may be executed by the screen printing or pad printing processes.

10. Control panel insert (1) according to one of claims 1 to 9, **characterised in that** at least the scatter varnish layer is imprinted in the third or fourth layer in specifiable areas with respectively differing layer thicknesses.

11. Control panel insert (1) according to one of claims 1 to 10, **characterised in that** at least the scatter varnish layer is imprinted in the third or fourth layer with a uniform thickness.

12. Control panel insert (1) according to one of claims 1 to 11, **characterised in that** the scatter varnish layer contains mainly light-scattering particles and a minimum possible proportion of light-reflecting particles.

13. Control panel insert (1) according to one of claims 1 to 12, **characterised in that** the blocking varnish layer is translucent and has no optically detectable filtering effect on the visible spectrum.

14. Control panel insert (1) according to one of claims 1 to 13, **characterised in that** the layer thickness of the blocking varnish layer is within a range of 5 to 50 µm.

15. Control panel insert (1) according to one of claims 1 to 14, **characterised in that that** the individual layers adhere to one another substantially by adhesive forces in their border areas.

16. Control panel insert (1) according to one of claims 1 to 15, **characterised in that** the printed border area of the screen insert (1) is opposite to the front face of the control panel insert (1) which faces the user.

17. Domestic appliance comprising at least one control panel insert (1) according to one of claims 1 to 16.

18. Use of a control panel insert (1) according to one of claims 1 to 16 such that the control panel insert (1) is allocated to a control panel carrier, which is intended for receiving operating elements (2) as an optical seal for the control panel carrier in a domestic appliance, e.g. a dishwasher, washing machine, tumble dryer, receiving apertures being allocated in the control panel insert (1) for the operating elements (2) and optical display elements (3) corresponding thereto and may be formed as areas which can be lit up in a specified manner, illuminating elements being correspondingly allocated to the display elements (3), which illuminating elements transmit light with different radiation characteristics, wherein at least in a partial area of at least one display element (3) the light transmitted by the illuminating elements is scattered.

## Revendications

1. Signalisateur optique (1) en matériau plastique transparent, **caractérisé en ce qu'**est appliquée sur une face de délimitation du signalisateur optique (1) dans une première couche, une écriture symbolique, **en ce qu'**est appliquée sur cette première couche, dans une deuxième couche, au moins dans une face partielle définissable, une coloration réglable variable, colorant le signalisateur optique (1), où au moins une face partielle non pourvue de coloration est réalisée comme ouverture de passage de lumière, et **en ce que**, dans une troisième couche, une couche de blocage est appliquée et, dans une quatrième couche, au moins sur les ouvertures de passage de lumière, un vernis de diffusion, diffusant la lumière, est appliqué en une épaisseur de couche définissable.

2. Signalisateur optique (1) selon la revendication 1, **caractérisé en ce que** le matériau synthétique laissant passer la lumière est transparent.

3. Signalisateur optique (1) selon la revendication 1 ou 2, **caractérisé en ce que** le matériau synthétique est du polycarbonate.

4. Signalisateur optique (1) selon l'une des revendications 1 à 3, **caractérisé en ce que** la coloration dans la deuxième couche bloque le passage de la lumière.

5. Signalisateur optique (1) selon l'une des revendications 1 à 4, **caractérisé en ce que** la face partielle non pourvue de coloration est réalisée sous la forme d'un élément d'affichage (3).

6. Signalisateur optique (1) selon l'une des revendications 1 à 5, **caractérisé en ce que** la couche de blocage appliquée à la troisième couche est disposée seulement sur l'impression de coloration.

7. Signalisateur optique (1) selon l'une des revendications 1 à 6, **caractérisé en ce que** le vernis de diffusion est disposé dans la troisième couche, et la couche de blocage est appliquée comme quatrième couche.

8. Signalisateur optique (1) selon l'une des revendications 1 à 7, **caractérisé en ce que** l'écriture symbolique, la coloration, la couche de blocage et le vernis de diffusion sont imprimés.

9. Signalisateur optique (1) selon l'une des revendications 1 à 8, **caractérisé en ce que** l'impression des couches un à quatre peut être exécutée par un procédé de sérigraphie ou par application de tampons.

10. Signalisateur optique (1) selon l'une des revendications 1 à 9, **caractérisé en ce qu'**au moins la couche de vernis de diffusion est imprimée dans la troisième ou la quatrième couche dans des faces partielles définissables en une épaisseur de couche respectivement différente.

11. Signalisateur optique (1) selon l'une des revendications 1 à 10, **caractérisé en ce qu'**au moins la couche de vernis de diffusion est imprimée dans la troisième ou la quatrième couche en une épaisseur uniforme.

12. Signalisateur optique (1) selon l'une des revendications 1 à 11, **caractérisé en ce que** la couche de vernis de diffusion contient essentiellement des particules de diffusion de lumière et, en une part la plus réduite possible, des particules réfléchissant la lumière.

13. Signalisateur optique (1) selon l'une des revendications 1 à 12, **caractérisé en ce que** la couche de vernis de blocage laisse passer la lumière et ne présente pas d'effet de filtrage perceptible optiquement du spectre de lumière visible.

14. Signalisateur optique (1) selon l'une des revendications 1 à 13, **caractérisé en ce que** l'épaisseur de couche de la couche de vernis de blocage se situe dans une plage de 5 à 50 µm.

15. Signalisateur optique (1) selon l'une des revendications 1 à 14, **caractérisé en ce que** les différentes couches adhèrent à leurs faces limites essentiellement par des forces d'adhérence.

16. Signalisateur optique (1) selon l'une des revendications 1 à 15, **caractérisé en ce que** la face de délimitation imprimée du signalisateur optique (1) est opposée au côté frontal du signalisateur optique (1) qui est orienté vers l'utilisateur.

17. Appareil ménager avec au moins un signalisateur optique (1) selon l'une des revendications 1 à 16.

18. Utilisation d'un signalisateur optique (1) selon l'une des revendications 1 à 16 de telle sorte que le signalisateur optique (1) est associé à un support de bandeau qui sert à recevoir des éléments de commande (2), comme terminaison optique du support de bandeau dans un appareil ménager, par exemple un lave-vaisselle, un lave-linge, un sèche-linge, que dans le signalisateur optique (1), des ouvertures de réception pour des éléments de commande (2) et des éléments d'affichage optiques (3) correspondant à ceux-ci sont associés qui, quant à leur forme peuvent être configurés comme faces pouvant être éclairées d'une manière définie, où sont associés aux éléments d'affichage (3) des éléments d'éclairage correspondants qui émettent de la lumière avec une caractéristique de rayonnement différente et qui éclairent les éléments d'affichage (3), où au moins dans une face partielle d'au moins un élément d'affichage (3), la lumière émise par les éléments d'éclairage est diffusée.
